# EUROPEAN PATENT APPLICATION

(11) **EP 3 584 178 A1**
(43) Date of publication of application: **25.12.2019**
(21) Application number: 18754684.1
(22) Date of filing: 01.02.2018
(51) Int. Cl.: B64G 1/64

(54) **CAPTURING SYSTEM, SPACE NAVIGATION BODY, AND PLATE-LIKE BODY**

(30) Priority: 15.02.2017 JP 2017025747; 07.04.2017 JP 2017076673
(71) Applicant: Astroscale Japan Inc., Sumida-ku, Tokyo 130-0013 (JP)
(72) Inventor: MAEDA, Ken, Tokyo 130-0013 (JP); SETO, Yuki, Tokyo 130-0013 (JP)
(74) Representative: Plasseraud IP
(86) International application number: PCT/JP2018/003336
(87) International publication number: WO 2018/150883

(57) **Abstract**

An object is to increase the success rate of missions at a low cost in a capturing system that captures a target object in the space. A capturing system 1 that captures a target object T in the space has: a plate-like body 10 that is attached to the target object T and attracted with magnetic force; and an aerospace vehicle 20 that has a magnetic force generating portion 23 which generates the magnetic force attracting the plate-like body 10. The aerospace vehicle 20 has a magnetic force generating portion 23 generating magnetic force and enables capturing of the target object T by attracting the plate-like body 10, which is attached to the target object T in the space and attracted with magnetic force, with magnetic force generated in the magnetic force generating portion 23. The plate-like body 10 is attached to the target object T in the space before the target object T is launched to the space and enables the aerospace vehicle 20 to capture the target object T by being attracted with magnetic force generated by the magnetic force generating portion 23 of the aerospace vehicle 20.

## Description

### Technical Field

The present invention relates to a capturing system, an aerospace vehicle, and a plate-like body.

### Background Art

It is known that remains of space missions, such as artificial satellites which were launched in the past and completed their missions, broken and fragments thereof, or the upper stage of a rocket, are currently present as space debris (hereinafter referred to as "debris") on orbit around the earth. Such debris may collide with and damage operational space stations and artificial satellites. Therefore, various techniques of deorbiting and burning the debris in the atmosphere or collecting the debris have been proposed.

For example, a technique has been proposed which includes bringing a mother unit close to the debris, capturing the debris by a robot arm provided on the mother unit, attaching a conductive tether device to the debris, , and decelerating the debris by an electromagnetic force acting on the tether (Japanese Patent Laid-Open No. 2004-98959). Moreover, in recent years, a technique has been proposed which includes, in order to release and deploy a tether in space, bringing a mother unit close to debris, ejecting a harpoon with the tether from a debris capturing device provided on the mother unit towards the debris, and causing the harpoon to penetrate into the debris (Japanese Patent Laid-Open No. 2016-68730).

### Citation List

### Patent Document

Patent Document 1: Japanese Patent Laid-Open No. 2004-98959

### Summary

### Technical Problem

However, in the capturing technique by the robot arm described in Japanese Patent Laid-Open No. 2004-98959, the robot arm has a complicated mechanism, and therefore, the mass and the size of the device increase, so that the cost for development, manufacturing, or launch becomes very high. Moreover, in the capturing technique by the harpoon described in Japanese Patent Laid-Open No. 2016-68730, a harpoon ejecting mechanism is required, which increases the cost. Furthermore, when the ejection of the harpoon has failed once, the ejection cannot be redone, and therefore, there has been a possibility that the success rate of the mission has decreased.

The present invention has been made in view of such circumstances. The objective of the present invention is to increase the success rate of missions at a low cost for a capturing system which captures a target object in space.

### Solution to Problem

In order to achieve the objective, a capturing system according to the present invention captures a target object in space and has: a plate-like body which is attached to the target object and attracted with a magnetic force; and an aerospace vehicle that has a magnetic force generating portion which generates the magnetic force attracting the plate-like body. An aerospace vehicle according to the present invention has a magnetic force generating portion generating a magnetic force that enables capturing of a target object in space by attracting a plate-like body, which is attached to the target object and attracted with magnetic force, with magnetic force generated by the magnetic force generating portion. Furthermore, a plate-like body according to the present invention is attached to a target object in space before the target object is launched to space, and enables the aerospace vehicle to capture the target object by being attracted with magnetic force generated by the magnetic force generating portion of the aerospace vehicle.

When such a configuration is employed, a target object in space can be captured by attaching a plate-like body, which is attracted with magnetic force, to the target object prior to launch, and then attracting the plate-like body with magnetic force generated by the magnetic force generating portion of the aerospace vehicle. The plate-like body which is attached to the target object prior to launch has no electrical or mechanical structures, and the mechanism of the magnetic force generating portion of the aerospace vehicle is relatively simple. Therefore, the development or manufacturing cost can be markedly reduced.

The capturing system according to the present invention can employ a magnetic force generating portion that has a plate-like member and a magnetic portion placed on the surface of the plate-like member. Herein, two or more of the magnetic portions can be placed at a predetermined interval along the peripheral edge of the plate-like member.

As the magnetic portion, a permanent magnet can be employed. Thus, the magnetic force generating portion can be configured at a relatively low cost. Moreover, an electromagnet that generates a magnetic force by applying an electric current may be employed as the magnetic portion. Thus, when the attachment between the magnetic force generating portion and the plate-like body is undesirable, for example, the electric current applied to the electromagnet is stopped to temporarily eliminate the magnetic force, whereby the undesired attachment can be canceled. Thereafter, by restarting the current application to the electromagnet as necessary, the attraction between the magnetic force generating portion and the plate-like body can be resumed.

The capturing system according to the present invention can employ an aerospace vehicle that has a body and a rod-shaped member that may be deployed and retracted from the body. In such a case, the magnetic force generating portion can be attached to the tip of the rod-shaped member.

When such a configuration is employed, the magnetic force generating portion is attached to the tip of the rod-shaped member that may be deployed and retracted from the body of the aerospace vehicle. Therefore, in capturing a target object, the rod-shaped member is deployed from the body of the aerospace vehicle to the plate-like body of the target object, so that the magnetic force generating portion can be brought close to the plate-like body. On the other hand, when the aerospace vehicle travels in space, the rod-shaped member can be retracted into the body. Therefore, the interference between portions other than the plate-like body of the target object, such as antennas, nozzles, or solar cells, and the rod-shaped member can be prevented. Moreover, by first contacting the target object with the tip (magnetic force generating portion) of the rod-shaped member placed on the aerospace vehicle, the action of the load of the entire aerospace vehicle on the target object can be prevented. Therefore, the influence on the target object can be minimized.

In the capturing system according to the present invention, the plate-like body can have a portion containing magnetic materials, such as iron, nickel, permalloy, steel, and others.

### Advantageous Effects of Invention

According to the present invention, for the capturing system which captures a target object in space, such as debris, the success rate of a mission thereof can be increased at a low cost.

### Brief Description of Drawings

FIG. 1 is a configuration diagram for explaining the entire configuration of a capturing system according to an embodiment of the present invention.
FIG. 2 is a plan view of a plate-like body configuring the capturing system according to the embodiment of the present invention.
FIG. 3 is a structure diagram for explaining the internal structure of the plate-like body illustrated in FIG. 2.
FIG. 4 is a perspective diagram of an aerospace vehicle configuring the capturing system according to the embodiment of the present invention.
FIG. 5 is a perspective diagram illustrating a state where a rod-shaped member of the aerospace vehicle illustrated in FIG. 4 is retracted into the body.
FIG. 6 is a front view of a magnetic force generating portion of the aerospace vehicle illustrated in FIG. 4.
FIG. 7 is a front view of a modification of the magnetic force generating portion of the aerospace vehicle illustrated in FIG. 4.
FIG. 8 is a plan view of a plate-like body according to another embodiment of the present invention.
FIG. 9 is an explanatory view for explaining a demagnetizing field generated inside a magnetic body wherein (A) refers to an oblong-shaped magnetic body and (B) refers to a substantially square-shaped magnetic body.
FIG. 10 is an explanatory view for explaining a magnetic path inside a magnetic body.

### Description of Embodiments

Hereinafter, an embodiment of the present invention is described with reference to the drawings.

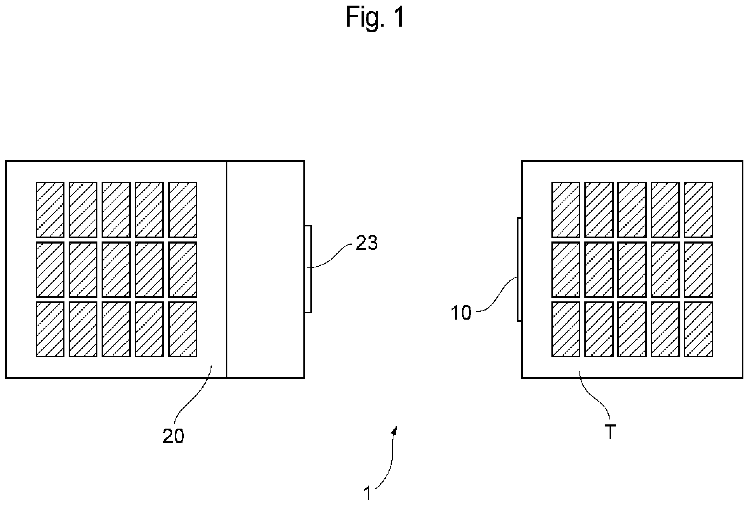

First, the configuration of a capturing system 1 according to the embodiment of the present invention is described with reference to FIG. 1 to FIG. 7.

The capturing system 1 according to this embodiment is one for capturing a target object (for example, debris) T in space, which has a plate-like body 10 attached to the target object T and an aerospace vehicle 20 having a magnetic force generating portion 23 (described later) generating magnetic a force that attracts the plate-like body 10, as illustrated in FIG. 1.

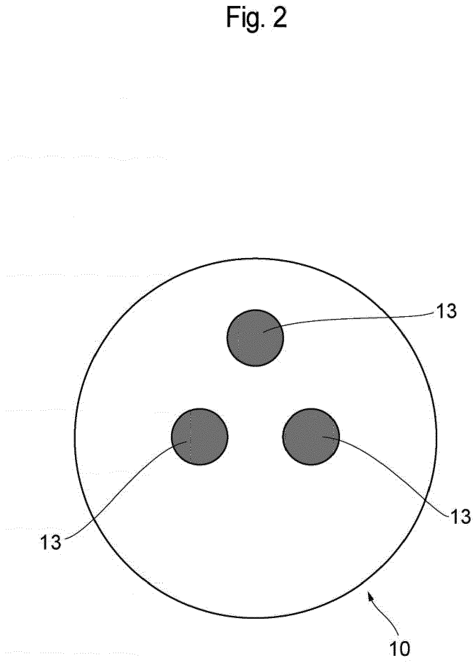

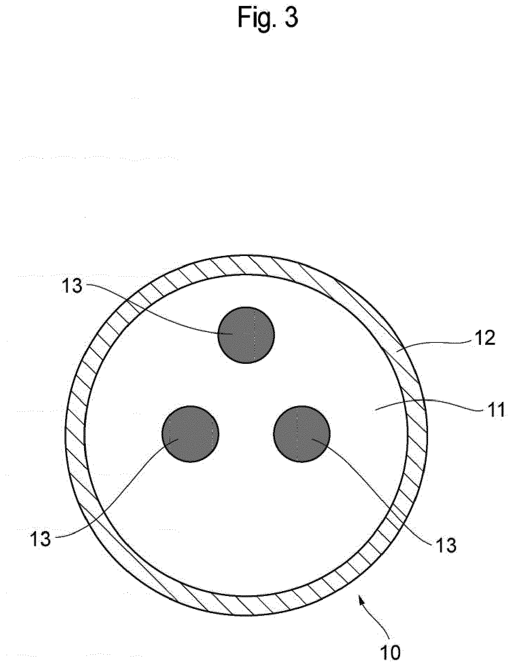

As illustrated in FIG. 2 and FIG. 3, the plate-like body 10 is a plate-like member having a circular shape as viewed in a plan view, has a predetermined thickness, and is attached beforehand to a predetermined portion (for example, a flat portion) of the target object T.

The plate-like body 10 in this embodiment has a central portion 11 containing aluminum and a peripheral portion 12 containing iron as illustrated in FIG. 3, and is configured so that the peripheral portion 12 containing iron, which is a magnetic material, is attracted to the magnetic force generating portion 23 of the aerospace vehicle 20. The peripheral portion 12 can also contain other magnetic materials (for example, nickel, permalloy, steel, etc.) in place of iron. Both the central portion 11 and the peripheral portion 12 may contain magnetic materials, such as iron. The area of the plate-like body 10 can be set to be either equal to or slightly larger than the area of the magnetic force generating portion 23 of the aerospace vehicle 20.

In the central portion 11 of the plate-like body 10, markers 13 can be placed for approach navigation of the aerospace vehicle 20. The markers 13 show a certain geometric pattern, and three or more circles can be arranged in a predetermined pattern. The markers 13 contain materials (for example, glass beads, a corner cube mirror, etc.) capable of reflecting light emitted from the aerospace vehicle 20 directly towards the aerospace vehicle 20. In order to specify the position and the movement of the plate-like body 10, at least three markers 13 are preferably placed. In order to prevent damage to the plate-like body 10 during magnetic attraction, specific surface processing can be applied to the plate-like body 10.

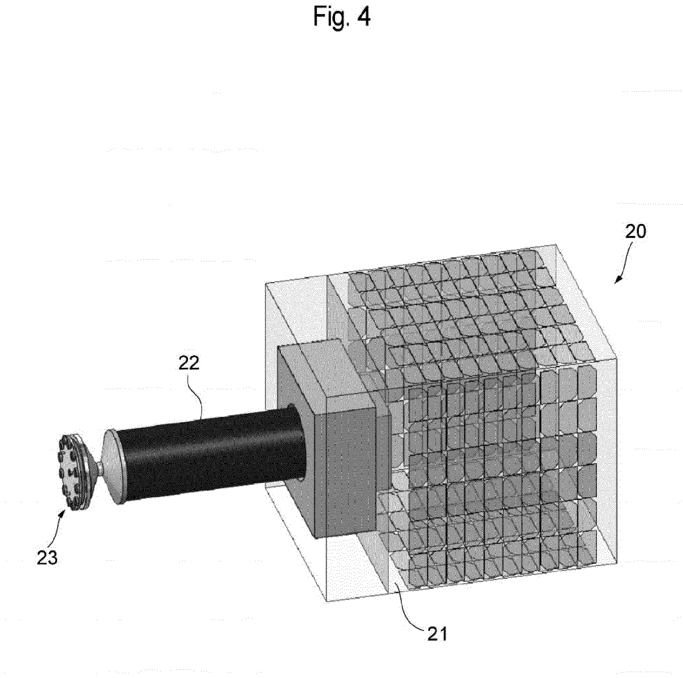

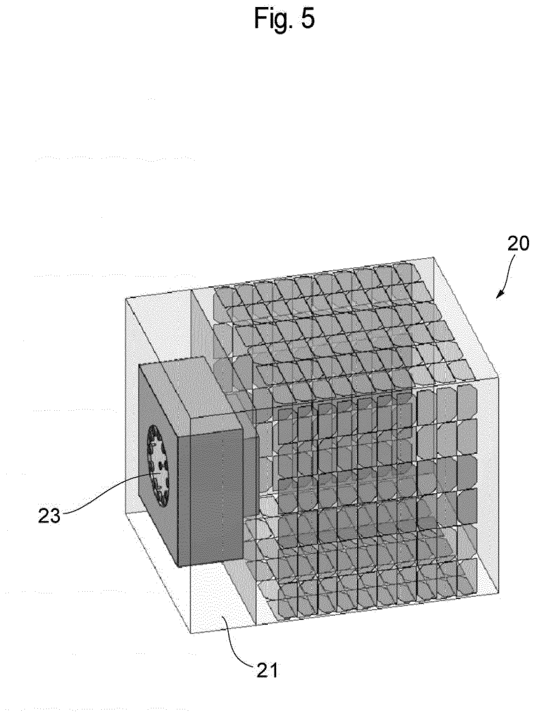

The aerospace vehicle 20 is configured so as to be attached to a rocket and launched into space, and then separated from the rocket to be autonomously movable in the space and has a body 21 having an approximately rectangular parallelepiped shape and a rod-shaped member 22 having an approximately cylindrical shape projectable and retractable from the body 21 as illustrated in FIG. 4. When the aerospace vehicle 20 is launched or moves in the space, the aerospace vehicle 20 is set to a state where the rod-shaped member 22 is retracted into the body 21 as illustrated in FIG. 5.

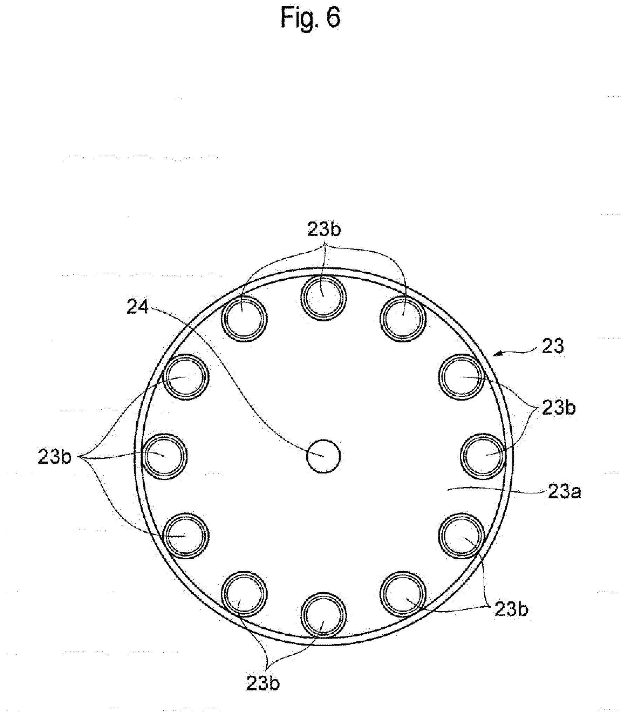

The magnetic force generating portion 23 generating magnetic force attracting the plate-like body 10 to the target object T is attached to the tip of the rod-shaped member 22 of the aerospace vehicle 20. The magnetic force generating portion 23 has a plate-like member 23a having a circular shape as viewed in a plan view and magnetic portions 23b provided on the surface of the plate-like member 23a as illustrated in FIG. 6. In this embodiment, a permanent magnet having a circular shape as viewed in a plan view is employed as the magnetic portion 23b and two or more of the permanent magnets are provided at a predetermined interval along the peripheral edge of the plate-like member 23a as illustrated in FIG. 6. The magnetic force generated by the magnetic force generating portion 23 is set to a value (for example, 4 N) with which the plate-like body 10 can be attracted.

The aerospace vehicle 20 can facilitate the navigation when approaching by recognizing the markers 13 or the like attached to the central portion of the plate-like body 10 with a camera 24 or the like of the aerospace vehicle 20 as illustrated in FIG. 6.

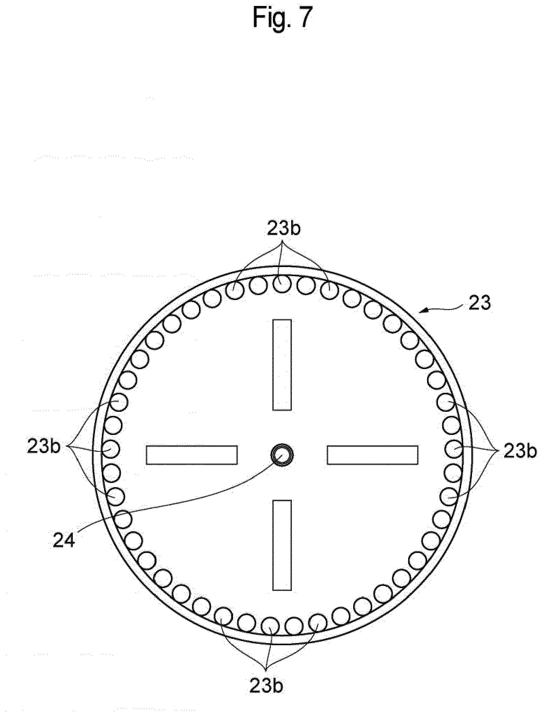

In the aerospace vehicle 20, the area per magnetic portion 23b, the position and the number of the magnetic portions 23b, and the like can be altered as appropriate. For example, in place of providing the magnetic portions 23b having a relatively large area as illustrated in FIG. 6, a large number of magnetic portions 23b having a relatively small area can also be provided as illustrated in FIG. 7.

Next, a method for capturing the target object T using the capturing system 1 according to the embodiment of the present invention is described.

First, the aerospace vehicle 20 is moved towards the target object T. Herein, the aerospace vehicle 20 searches for the plate-like body 10 attached to the target object T while performing imaging with the camera 24. The search of the plate-like body 10 is completed through reflecting light emitted from a light projector on the surface of the markers 13 attached to the surface of the plate-like body 10, capturing the light with the camera 24, and then recognizing the same by an arithmetic operation portion, for example. By recognizing the relative position and the relative attitude of the target object T from, for example, information obtained by recognizing the pattern of the markers 13 on the surface of the plate-like body 10, the aerospace vehicle 20 is movable so as to approach the target object T.

Subsequently, when the distance between the target object T and the aerospace vehicle 20 reaches a value equal to or smaller than a predetermined value, the rod-shaped member 22 of the aerospace vehicle 20 is projected from the body 21 to the plate-like body 10 of the target object T. Then, the plate-like body 10 attached to the target object T beforehand is attracted with magnetic force generated by the magnetic force generating portion 23 attached to the tip of the rod-shaped member 22 of the aerospace vehicle 20. Then, the rod-shaped member 22 of the aerospace vehicle 20 is retracted into the body 21 side, whereby the target object T is brought close to the aerospace vehicle 20 to be captured.

In the capturing system 1 according to the embodiment described above, the plate-like body 10 to be attracted with magnetic force is attached to the target object T in the space beforehand, and then the plate-like body 10 is attracted with magnetic force generated by the magnetic force generating portion 23 of the aerospace vehicle 20, whereby the target object T can be captured. The plate-like body 10 attached to the target object T beforehand has no electrical and mechanical structures and the mechanism of the magnetic force generating portion 23 of the aerospace vehicle 20 is also relatively simple, and therefore the development/manufacturing cost can be markedly reduced.

In the capturing system 1 according to the embodiment described above, the permanent magnet is employed as the magnetic portion 23b, and therefore the magnetic force generating portion 23 can be configured at a relatively low cost.

Moreover, in the capturing system 1 according to the embodiment described above, the magnetic force generating portion 23 is attached to the tip of the rod-shaped member 22 projectably and retractably provided to the body 21 of the aerospace vehicle 20. Therefore, when capturing the target object T, the magnetic force generating portion 23 can be brought close to the plate-like body 10 by projecting the rod-shaped member 22 from the body 21 of the aerospace vehicle 20 to the plate-like body 10 of the target object T. On the other hand, when the aerospace vehicle 20 travels in the space, the rod-shaped member 22 can be retracted into the body 21. Therefore, the interference between the other portions (portions other than the plate-like body 10, such as an antenna, a nozzle, and a solar cell) and the rod-shaped member 22 of the target object T can be prevented. Moreover, by first contacting the target object T with the tip (magnetic force generating portion 23) of the rod-shaped member 22 provided to the aerospace vehicle 20, the action of the load of the entire aerospace vehicle 20 on the target object T can be prevented. Therefore, the influence on the target object T can be minimized.

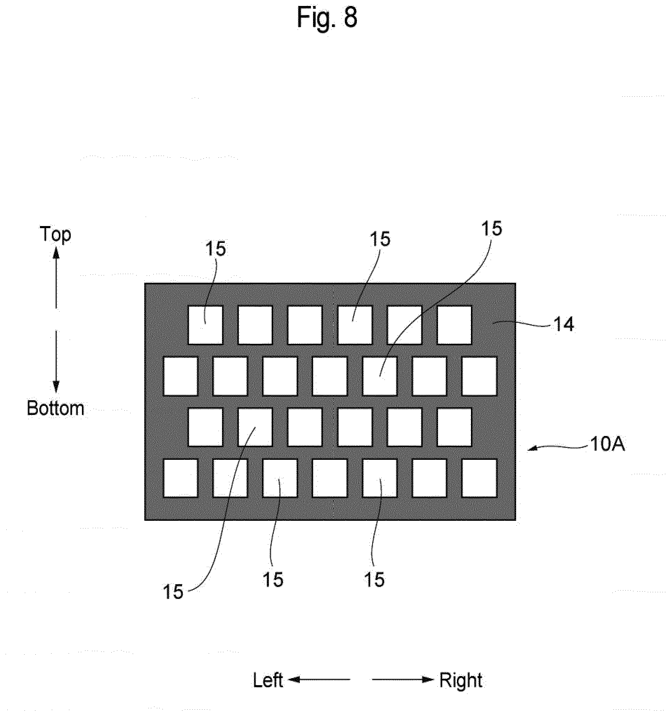

This embodiment describes the example in which: the plate-like body 10 having a circular shape as viewed in a plan view is employed; and the peripheral portion 12 having an annular shape of the plate-like body 10 contains magnetic materials, as illustrated in FIG. 3; however, the shape of the plate-like body 10 and the shape of the portion containing magnetic materials (a magnetic body) are not limited to those in the above example. For example, as illustrated in FIG. 8, a plate-like body 14 (the colored portion) having a rectangular shape as viewed in a plan view may contain magnetic materials, and multiple holes 15 each having a substantially small square shape may be opened in the plate-like body 14, thereby making it possible to obtain a magnetic plate-like body 10A which allows for (i) a reduction in the generation of a magnetic moment derived from polarization caused by an external magnetic field, and (ii) the maintaining of an attracting force required for capturing.

Both when the target object T is operated and when the target object T is captured by the aerospace vehicle 20, it is necessary to minimize the attitude disturbance (i.e. an external force acting on the attitude of the target object T) that the plate-like body applies to the target object T. The plate-like body containing magnetic materials magnetized by itself and thereby has a magnetic moment. As a result, an electromagnetic interaction between the plate-like body and an external magnetic field generates a remanent magnetic torque in the target object T, and the generated remanent magnetic torque becomes a disturbance force that is not preferred for attitude control over the target control T. A smaller amount of magnetic materials leads to a smaller remanent magnetic torque; meanwhile, in order to facilitate capturing the target object T, a greater amount of magnetic materials is preferred. By employing the magnetic plate-like body 10A having the shape illustrated in FIG. 8, the above-mentioned contradictory requirements can be met.

Following descriptions will explain the reason why the employment of the magnetic plate-like body 10A having the shape illustrated in FIG. 8 allows for the above-mentioned contradictory requirements to be met (i.e. (i) a reduction in the generation of a magnetic moment derived from magnetization caused by an external magnetic field, and (ii) the maintaining of an attracting force required for capturing).

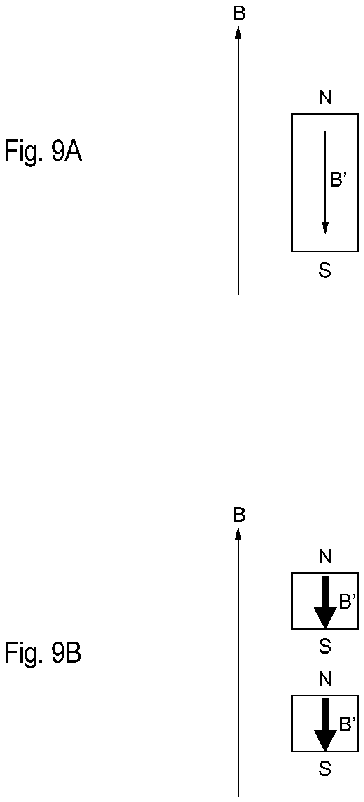

As illustrated in FIG. 9(A), when an external magnetic field B is applied to an oblong-shaped magnetic body, magnetization occurs in end surfaces of the magnetic body (polarized magnetization). This polarized magnetization generates a demagnetizing field B' inside the magnetic body. Inside the magnetic body, when the external magnetic field B and the demagnetizing field B' superimpose on each other and result in a zero magnetic field, the polarization of the magnetic body converges and is brought into a steady state. The oblong-shaped magnetic body illustrated in FIG. 9(A) involves a long distance between the end surfaces and therefore has a weak demagnetizing field B', and great magnetization is induced in the end surfaces accordingly (i.e., a low demagnetizing coefficient). Meanwhile, when the substantially square-shaped magnetic bodies illustrated in FIG. 9(B) are employed, each of such magnetic bodies involves a short distance between the end surfaces and therefore has a strong demagnetizing field B' generated by the magnetization generated in such end surfaces, and a zero magnetic field is generated inside the magnetic body before polarization progresses, whereby polarized magnetization is less likely to occur (i.e., a high demagnetizing coefficient). Therefore, in order to weaken polarized magnetization to the extent possible, it is more effective to combine magnetic bodies each involving a short distance between the end surfaces, as illustrated in FIG. 9(B).

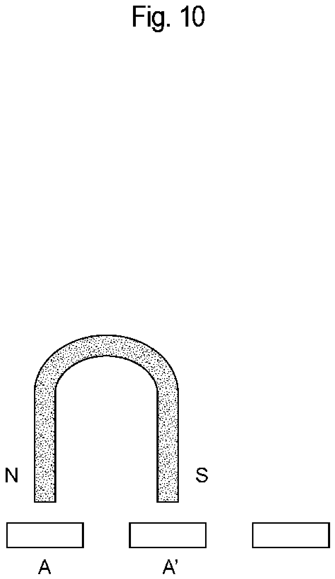

On the other hand, in order to strengthen attraction by a magnet, it is necessary to secure a magnetic path in which a magnetic field generated by the magnet in a direction perpendicular to the magnetic body is bent, inside the magnetic body, in a direction parallel to the magnetic body and is further circulated towards the magnet. When, as shown in FIG. 10, a magnetic body A and a magnetic body A' are separated from each other, the above magnetic path cannot be secured, and it therefore becomes necessary to combine these magnetic bodies.

In order to meet the above-mentioned contradictory requirements (i.e. (i) a reduction in the generation of a magnetic moment derived from polarization caused by an external magnetic field, and (ii) the maintaining of an attracting force required for capturing), it is effective to employ the magnetic plate-like body 10A which, as illustrated in FIG. 8, involves the staggered arrangement of substantially square-shaped holes 15 (more specifically, holes 15 are arranged vertically (top and bottom) and horizontally (right and left), where some of the holes 15 are placed in line in the horizontal direction whereas, in the vertical direction, some of the holes 15 are not placed in line but are instead placed such that the horizontal positions of the adjacent holes 15 are shifted from one another). When the above shape is employed, a magnetic path generated by a magnet in a direction perpendicular to the magnetic plate-like body 10A can be secured, and further, a high demagnetizing coefficient can be obtained so as to hinder polarization caused by an external magnetic field in the vertical and horizontal directions in the magnetic plate-like body 10A. Further, when the frame portion 14 (not the substantially square-shaped portions) contains magnetic materials, the thickness of the magnetic plate-like body 10A can be increased (to, for example, about 0.6 mm), and this allows to improve the attracting force of the magnet.

This embodiment describes the example in which a permanent magnet is employed as the magnetic portion 23b configuring the magnetic force generating portion 23 but an electromagnet generating magnetic force by current application can also be employed in place of the permanent magnet. Thus, when the attraction state between the magnetic force generating portion 23 and the plate-like body 10 is inappropriate, for example, the current application to the electromagnet is stopped to temporarily eliminate the magnetic force, whereby the inappropriate attraction state can be canceled. Thereafter, by restarting the current application to the electromagnet as necessary, the attraction between the magnetic force generating portion 23 and a plate-like body 10 can be realized again.

Moreover, by combining an electromagnet and a permanent magnet, the magnetic force of the permanent magnet can be eliminated by current application. Thus, continuous power is not required in the attraction state and, when the magnetic force generating portion 23 and the plate-like body 10 enter an inappropriate attraction state, the inappropriate attraction state can be cancelled by current application for a short period of time. Thereafter, by restarting the current application to the electromagnet as necessary, the attraction between the magnetic force generating portion 23 and the plate-like body 10 can be realized again.

Moreover, in this embodiment, the plane shape of the plate-like body 10 to be attached to the target object T is set to a circular shape but the plane shape of the plate-like body 10 is not limited to the circular shape and may be a polygonal shape (triangular shape, square shape, hexagonal shape, and the like), for example. The plane shape of the plate-like member 23a of the magnetic force generating portion 23 of the aerospace vehicle 20 is also not limited to the circular shape and can be set to a polygonal shape, for example. Moreover, the shape of the aerospace vehicle 20 is also not limited to the approximately rectangular parallelepiped shape and can be set to an approximately columnar shape, for example.

The present invention is not limited to the embodiment described above and embodiments obtained by adding design changes to the embodiment described above as appropriate by a person skilled in the art are also included in the scope of the present invention insofar as the embodiments have the features of the present invention. More specifically, the elements of the embodiment described above and the arrangement, materials, conditions, shapes, sizes, and the like thereof are not necessarily limited to those described as examples and can be altered as appropriate. Moreover, the elements of the embodiment described above can be combined as long as the combination is technically allowed and those obtained by combining the elements are also included in the scope of the present invention insofar as the combinations include the features of the present invention.

### <Appendix>

Clause 1 A capturing system that captures a target object in the space, and has:
   a plate-like body that is attached to the target object and attracted with magnetic force, and
   an aerospace vehicle that has a magnetic force generating portion which generates the magnetic force attracting the plate-like body.
Clause 2 The capturing system according to Clause 1, wherein the magnetic force generating portion has a plate-like member and a magnetic portion provided on a surface of the plate-like member.
Clause 3 The capturing system according to Clause 2, wherein two or more of the magnetic portions are provided at a predetermined interval along the peripheral edge of the plate-like member.
Clause 4 The capturing system according to Clause 2 or 3, wherein the magnetic portion is a permanent magnet.
Clause 5 The capturing system according to Clause 2 or 3, wherein the magnetic portion is an electromagnet that generates magnetic force by current application.
Clause 6 The capturing system according to any one of Clauses 1 to 5, wherein:
   the aerospace vehicle has a body and a rod-shaped member projectably and retractably provided to the body, and
   the magnetic force generating portion is attached to the tip of the rod-shaped member.
Clause 7 The capturing system according to any one of Clauses 1 to 6, wherein the plate-like body has a portion containing magnetic materials.
Clause 8 The capturing system according to Clause 7, wherein the magnetic material is iron, nickel, permalloy, or steel.
Clause 9 An aerospace vehicle that has a magnetic force generating portion generating magnetic force, and enables capturing of a target object in the space by attracting a plate-like body, which is attached to the target object and attracted with magnetic force, with magnetic force generated by the magnetic force generating portion.
Clause 10 A plate-like body that is attached to a target object in the space before the target object is launched to the space, and enables the aerospace vehicle to capture the target object by being attracted with magnetic force generated in the magnetic force generating portion of the aerospace vehicle.

### Reference Signs List

- 1: Capturing system
- 10: Plate-like body
- 11: Central portion
- 12: Peripheral portion (Portion containing magnetic materials)
- 13: Marker
- 20: Aerospace vehicle
- 21: Body
- 22: Rod-shaped member
- 23: Magnetic force generating portion
- 23a: Plate-like member
- 23b: Magnetic portion
- 24: Camera
- T: Target object

## Claims

1. A plate-like body, that is attached to a target object in a space before the target object is launched to the space, the plate-like body comprising a marker for approach navigation of an aerospace vehicle.

2. The plate-like body according to Claim 1, wherein the marker contains a material capable of reflecting light and reflects light emitted from the aerospace vehicle towards the aerospace vehicle.

3. The plate-like body according to Claim 2, wherein the marker contains glass beads or a mirror.

4. The plate-like body according to any one of Claims 1 to 3, wherein at least three pieces of the marker are provided.

5. The plate-like body according to any one of Claims 1 to 4, wherein the markers show a certain geometric pattern.

6. The plate-like body according to Claim 5, wherein the markers are circles located in a predetermined pattern.

7. The plate-like body according to any one of Claims 1 to 6, comprising a portion containing a magnetic material.

8. The plate-like body according to Claim 7, comprising a peripheral portion and a central portion,
wherein the peripheral portion containing a magnetic material, and the markers are placed in the central portion.

9. The plate-like body according to Claim 7 or 8, wherein the magnetic material is iron, nickel, permalloy, or steel.

10. A capturing system, which captures a target object in a space, the capturing system comprising:
the plate-like body according to any one of Claims 7 to 9; and
an aerospace vehicle that has a magnetic force generating portion which generates magnetic force attracting the plate-like body.

11. The capturing system according to Claim 10, wherein the magnetic force generating portion has a plate-like member and a magnetic portion placed on a surface of the plate-like member.

12. The capturing system according to Claim 11, wherein the magnetic portion is a permanent magnet.

13. The capturing system according to Claim 11, wherein the magnetic portion is an electromagnet that generates magnetic force by applying current.

14. The capturing system according to any one of Claims 10 to 13, wherein the aerospace vehicle has a body and a rod-shaped member projectable and retractable from the body,
wherein the magnetic force generating portion is attached to a tip of the rod-shaped member.

15. An aerospace vehicle comprising a magnetic force generating portion that generates magnetic force,
wherein the aerospace vehicle enables capturing a target object in a space by attracting the plate-like body according to any one of Claims 7 to 9 with magnetic force generated by the magnetic force generating portion.
